# EUROPÄISCHE PATENTSCHRIFT

(11) **EP 2 685 590 B1**
(45) Veröffentlichungstag und Bekanntmachung des Hinweises auf die Patenterteilung: **22.03.2017**
(21) Anmeldenummer: 13171250.7
(22) Anmeldetag: 10.06.2013
(51) Int. Cl.: H02J 7/00, H02J 7/36

(54) **Pufferspeicher einer Gleichstromenergieerzeugungsanlage**
Buffer storage of a direct current generating installation
Accumulateur-tampon d'une installation de production d'énergie à courant continu

(30) Priorität: 09.07.2012 DE 102012211953
(43) Veröffentlichungstag der Anmeldung: 15.01.2014
(73) Patentinhaber: Mack, Helmut, 72805 Lichtenstein (DE)
(72) Erfinder: Mack, Helmut, 72805 Lichtenstein (DE); Mack, Johanna, 72805 Lichtenstein (DE)
(74) Vertreter: Erhardt, Martin

(56) Entgegenhaltungen:
- US-A1- 2006 092 583
- US-A1- 2010 261 048
- US-B2- 7 705 560

## Beschreibung

Die Erfindung betrifft einen Pufferspeicher für elektrische Energie einer Gleichstromenergieerzeugungsanlage, mit welchem elektrische Energie der Gleichstromenergieerzeugungsanlage weitergeleitet, gespeichert und/oder im Pufferspeicher gespeicherte Energie an einen Verbraucher abgegeben werden kann. Dabei bezieht sich die Erfindung insbesondere auf Photovoltaik-, Windkraft-, Gezeiten-, Wellenkraft- oder Impulskraftanlagen, bei denen insbesondere alternativ zur Verbrennung von fossilen Brennstoffen elektrische Energie in Form von Gleichstrom bereitgestellt wird. Die vorliegende Erfindung betrifft weiter insbesondere Gleichstromenergiebereitstellungsanlagen, die alternativ zu atomaren Stromerzeugungsanlagen anderweitig chemisch gebundene oder kinetische Energien in elektrische Gleichspannungsenergie umwandeln.

Die Druckschrift "Akkumulatoren und Akkumulatorenanlagen" von Stohn, erschienen im VEB Verlag Technik Berlin offenbart eine Spannungsregelung mit alkalischen Gegenzellen, Zellenschaltern sowie entsprechenden Schaltungsschemata, bei Einsatz alkalischer Gegenzellen bzw. für die Regelung durch Zellenschalter.

Die Druckschrift DT 25 00 275 A1 lehrt ein elektrisches Versorgungssystem, insbesondere elektrische Energiewandler.

Weiterhin gehören die Dokumente US 7,705,560 B2, US 2010/261048 A1 und US 2006/092583 A1 zum Stand der Technik.

Das Problem bei Energieerzeugungsanlagen aus Sonnenenergie, Windenergie, Gezeiten-, Wellen- oder Impulsenergie besteht darin, dass hierfür geeignete Stromerzeugungsanlagen je nach herrschenden Umweltbedingungen in ihrer Energieerzeugung bzw. -abgabe stark schwanken und beispielsweise vom Sonnenlicht, der Windstärke oder anderen Umwelt- und/oder Wettereinflüssen abhängig sind.

Verbraucher erhalten elektrische Energie/Leistung jedoch bevorzugt konstant, damit elektrische Anlagen wirtschaftlich betrieben werden können. Dabei darf ein Maximalwert zum Schutz vor Überlastung des Verbrauchers nicht überschritten werden. Verbraucher sind im Sinne der Erfindung insbesondere Stromnetze, die von Netzbetreibern verwaltet werden, oder auch private Haushalte sowie alle weiteren denkbaren mobilen und stationären elektrischen Verbraucher. Eine Versorgung von mobilen Verbrauchern, wie beispielsweise Elektrofahrzeugen oder ähnlichen, sind von der Erfindung ebenfalls umfasst, wie elektrische Bewässerungsanlagen oder Haushaltsgeräte, wie Kühlschränke, Geschirrspülmaschine, Waschmaschinen, uvm. Des Weiteren eignet sich die vorliegende Erfindung für den Einsatz zur elektrischen (Teil-) Versorgung von Industrieanlage beispielsweise Werkzeugmaschinen, o.ä.

Damit die beispielsweise von Photovoltaikanlagen oder Windkraftanlagen oder ähnlichen Anlagen erzeugbare elektrische Energie möglichst vollständig und, wenn möglich auch mit einem konstanten Niveau, abgegeben werden kann, werden Pufferspeicher bzw. Zwischenspeichersysteme eingesetzt, welche eine Mehr- oder Minderleistung in der Energieerzeugung gegenüber dem von dem Verbraucher verwendbaren konstanten Leistung abgepuffert, angereichert und/oder zeitverzögert bereitstellen. So können beispielsweise Energiepuffer nachts, wenn die Sonne nicht mehr scheint, elektrische Energie an einen Verbraucher abgeben, die tagsüber erzeugt und nicht verbraucht wurde. Ähnliches bzw. Analoges gilt für Wind-, Wellen-, Gezeiten-, und/oder Impulskraftwerke, welche bei Vorhandensein von kinetischer bzw. potentieller Energie diese in elektrische Energie umwandeln können, jedoch nicht, wenn die Windstärke bzw. der Wellengang oder die Impulskraft ausbleibt oder niedriger ist, als zum Erzeugen der nachgefragten elektrischen Leistung notwendig wäre.

Mit zunehmenden Ausbau der alternativen Energieerzeugungsanlagen für elektrische Energie treten bei optimalen Umwelt- und Wetterbedingungen Spannungsspitzen bei der Einspeisung in die Stromverteilungsnetze der Netzbetreiber auf, welche, auf entsprechende gesetzliche Reglungen gestützt, ihre Netze dadurch schützen können, dass die einspeisbare Energiemenge begrenzt wird. Gleiches gilt, wenn Energieversorgungsunternehmen (EVU) nur eine begrenzte Menge an Energie verkaufen können, da beispielsweise die Nachfrage nach Strom in den Nachtstunden gegenüber den Tagstunden geringer ist. Jedoch sind gerade tagsüber, z.B. von Photovoltaikanlagen, große Sonnenenergiemengen in elektrische Energie umwandelbar, die bei Fehlen eines Puffers nicht verwertet werden können, wenn der Stromnetzbetreiber die Einspeisung beschränkt. Ähnliches gilt bei Windkraftanlagen bei starken Winden, da diese dann mehr elektrische Energie zur Verfügung stellen, als abgenommen werden kann, bzw. verbraucht werden kann. Oftmals werden diese Anlagen in Ermangelung einer wirtschaftlichen Speichermöglichkeit für elektrische Energie in diesen Fällen künstlich gedrosselt oder gar abgeschaltet.

In einem anderen Fall müssen zum Einspeisen einer gleichmäßigen und konstanten Energiemenge Bereiche bspw. eines Solarparks oder Windparks oder einzelne Module eines Solarpaneles, die eine hohe Energieausbeute zeigen, abgeschaltet oder gedrosselt werden, da andere Bereiche durch Abschattung, oder weil sie eine andere Orientierung aufweisen, eine niedrigerere Energieausbeute zeigen und die niedrigste Energieausbeute die einem Verbraucher zur Verfügung stellbare Energie pro Zeiteinheit vorgibt.

Zum Ausgleich bzw. zur Abpufferung dieser Energiespitzen werden vereinzelt auch elektrische Energiespeicher verwendet, die jedoch aufgrund komplizierter Schaltungen meist recht ineffektiv bzw. mit einem niedrigen Wirkungsgrad arbeiten. Oftmals werden hier Gleichstrom/Gleichstrom-Wandler - auch Gleichspannungs-Wandler genannt - eingesetzt, um die Gleichspannung dem herkömmlichen Energiespeicher anzugleichen. Gleichspannungswandler weisen, wie hinlänglich bekannt, einen geringen Wirkungsgrad auf, da die Wandlung der Gleichspannung mit Verlusten behaftet ist. Hierbei wird der Gleichstrom üblicherweise zunächst in Wechselstrom konvertiert und in seiner Spannung transformiert, um danach wieder in Gleichstrom umgewandelt zu werden. Die bei der Transformation zwangsläufig entstehende Wärme stellt einen großen Teil der Verlustleistung des Gleichspannungswandlers dar. Weiterhin sind die im Stand der Technik verwendeten Energiespeicher in ihrem Aufbau aufwändig und ihre Schaltung kompliziert, so dass auch hier hohe Investitionen bzw. Energieverluste auftreten.

Die vorliegende Erfindung hat sich die Aufgabe gestellt, einen elektrischen Pufferspeicher bereitzustellen, der nicht nur in seinem Wirkungsgrad gegenüber den herkömmlichen Pufferspeichern verbessert ist, sondern der in seinem Aufbau und in der Verwendung robust und kostengünstig ist. Dabei soll der Energiespeicher flexibel unterschiedliche Energiemengen aufnehmen und abgegeben können, sodass am Ausgang des Pufferspeichers eine konstante Leistung nachgefragt werden kann, die ihrer Höhe flexibel einstellbar ist und auf unterschiedliche Nachfrage durch Abnehmer reagieren kann.

Die Aufgabe, die sich die Erfindung gestellt hat, wird mit einem Verfahren nach Anspruch 1 gelöst, wobei bevorzugte Ausführungsformen in den von Anspruch 1 direkt oder indirekt abhängigen Unteransprüchen angegeben sind. Ein Eine Schaltungsanordnung zum Zwischenspeichern von elektrischer Energie ist in dem weiteren unabhängigen Anspruch angegeben.

Der erfindungsgemäße Pufferspeicher für elektrische Energie einer Gleichstromenergieerzeugungsanlage weist hierbei eine Anschluss- und Schalteinheit auf, die mit einem Pluspol und einem Minuspol mit der Gleichstromenergieerzeugungsanlage direkt verbindbar ist. Über den anschlussseitigen Pluspol und den anschlussseitigen Minuspol kann von der Anschluss- und Schalteinheit elektrische Energie in Form von Gleichstrom von der Gleichstromenergieerzeugungsanlage entgegengenommen werden. Die Anschluss- und Schalteinheit des Pufferspeichers weist weiterhin eine Plusleitung und eine Minusleitung zum Weiterleiten von elektrischer Energie in Form von Gleichstrom auf. Dabei ist die Minusleitung so durch die Anschluss- und Schalteinheit geschleift, dass eine direkte Verbindung der Minusleitung vom Generator der Gleichstromenergieerzeugungsanlage zu einem Gleichstromverbraucher hergestellt werden kann.

In der Plusleitung der Anschluss- und Schalteinheit ist eine Speichereinheit eingebunden, über welche der Generator der Energieerzeugungsanlage für Gleichstrom mit einem Gleichstromverbraucher verbindbar ist. Der Pluspol der Plusleitung der Anschluss- und Schalteinheit ist dabei anschlussseitig direkt mit dem Pluspol des Gleichspannungsgenerators verbunden. Ein im Stand der Technik üblicherweise zwischen diese beiden Anschlussstellen zwischengeschalteter Gleichstromwandler (DC/DC-Wandler) ist erfindungsgemäß nicht notwendig. Ebenso ist es nicht notwendig die Speichereinheit zu erden. Dadurch wird insbesondere erreicht, dass am positiven Generatorausgang die Plusleitung der Anschluss- und Schalteinheit angeschlossen werden kann, welche wiederum direkt mit dem Pluspol der Speichereinheit verbunden ist. Der Minuspol der Speichereinheit steht mit dem Pluspol des Verbrauchers in direkter elektrischer Verbindung. Damit kann die elektrische Energie vom Gleichstromerzeuger über die Anschluss- und Schalteinheit mit der darin in der Plusleitung angeordneten Speichereinheit direkt an den Verbraucher geleitet werden, wobei bevorzugt am Verbraucher soviel Energie ankommt, wie vom Verbraucher aufnehmbar ist bzw. von diesem nachgefragt wird. Überschüssige, vom Gleichstromgenerator erzeugte elektrische Energie wird in der Speichereinheit gespeichert, und zwar unabhängig von der Höhe der überschüssigen Gleichspannung und unabhängig der "zuviel" erzeugten Gleichstromstärke.

Bei der Weiterleitung der elektrischen Energie kann die Speichereinheit entweder mit elektrischer Energie beladen werden - im Falle dass die Generatorleistung höher ist als die vom Verbraucher nachgefragte Leistung - oder entladen werden, im Falle einer Generatorleistung kleiner als die vom Verbraucher nachgefragte Leistung und bei Vorhandensein einer in der Speichereinheit gespeicherten elektrischen Energie. Selbstredend kann keine elektrische Energie von der Speichereinheit hinzugefügt werden, wenn die Speichereinheit entladen ist. In diesem Falle, also bei einer Generatorleistung kleiner als die Verbrauchernachfrage, kann der Verbraucher vom Pufferspeicher getrennt werden und kann mit einer anderen Energiequelle betrieben werden. Gleichzeitig kann die von der Gleichstromenergieerzeugungsanlage für den Verbraucher nicht ausreichende bereitgestellte Energie in der Speichereinheit gespeichert werden. Somit kann beispielsweise bei Schwachwind, wenn von der Windkraftanlage nicht ausreichend elektrische Energie bereitgestellt werden kann, zumindest die Speichereinheit geladen werden. Gegenüber dem Stand der Technik hat dies den Vorteil, dass auch hier die Energieerzeugungsanlage nicht stillstehen muss, und kleinere Energiemengen in der Speichereinheit akkumuliert werden können, bis eine akkumulierte elektrische Energie in der Speichereinheit vorhanden ist, die beispielsweise in ein Stromnetzwerk einspeisbar oder von einem Verbraucher verwertbar ist.

Damit ergibt sich eine weitere bevorzugte Anwendung für den erfindungsgemäßen Pufferspeicher, in dem an den Pufferspeicher mehrere Energieerzeugungsanlagen angeschlossen werden können, welche einzeln nicht den Energiebedarf eines Verbrauchers befriedigen können, jedoch in Summe soviel Energie im Pufferspeicher akkumulieren können, dass dieser die akkumulierte Energie zeitversetzt an einen Verbraucher abgeben kann, und zwar angepasst an die vom Verbraucher nachgefragte Leistung.

Dies führt zu einem weiteren Anwendungsfall für die erfindungsgemäße Pufferspeichereinheit, bei der die Pufferspeichereinheit mit elektrischer Energie geladen ist und gleichzeitig vom Generator keine elektrische Energie durch die Anschluss- und Schalteinheit entgegennehmbar ist. In diesem Falle kann die im Pufferspeicher gespeicherte elektrische Energie an einen Verbraucher abgegeben werden, damit die volle Speicherkapazität, bspw. am nächsten Morgen, wieder für die Aufladung durch eine z. B. Photovoltaikanlage zur Verfügung steht.

Im Rahmen der Erfindung sind Verbraucher elektrische Einheiten, die eine Stromsenke darstellen, die also beispielsweise Strom weiterleiten oder elektrische Energie wiederum in kinetische Energie, Wärmeenergie, potentielle Energie oder eine andere Energieform umwandeln können. Als Verbraucher werden auch Wechselrichter zur Einspeisung elektrischer Energie in ein Stromnetz angesehen. Für die Verwirklichung des Erfindungsgedankens sind alle Energieumwandlungsmöglichkeiten umfasst.

Der erfindungsgemäße Pufferspeicher für elektrische Energie kann je nach Generatorleistung und abgefragter Verbraucherleistung prinzipiell in vier Betriebszuständen vorliegen:
i) Laden des Pufferspeichers, wenn Generatorleistung größer ist als die nachgefragte Verbraucherleistung, wobei hier der Fall umfasst ist, in dem die nachgefragte Verbraucherleistung null ist;
ii) Entladen des Pufferspeichers, wenn die Generatorleistung kleiner ist als die nachgefragte Verbraucherleistung, wobei in diesem Fall die Generatorleistung auch null sein kann;
iii) Überbrücken des Pufferspeichers, wenn die Generatorleistung gleich nachgefragten Verbraucherleistung ist;
iv) Gesicherter Pufferspeicher mit allen Schaltungsverbindungen geöffnet, um eine Beschädigung an der Energieerzeugungsanlage, im Pufferspeicher oder am Verbraucher zu vermeiden.

Das Be- und Entladen des Pufferspeichers erfolgt gegenüber dem bekannten Stand der Technik insbesondere dadurch wirkungsgradverbessert, da beim Beladen des Pufferspeichers keine Gleichstrom/Gleichstrom-Wandlung notwendig ist. Der erfindungsgemäße Pufferspeicher für elektrische Energie wird mit seiner Anschluss- und Schalteinheit direkt - Pluspol an Pluspol und Minuspol an Minuspol - an den Gleichstromerzeuger angeschlossen und je nach oben angegebenen Betriebszustand be- oder entladen. Sowohl beim Be- als auch beim Entladen übernimmt die Anschluss- und Schalteinheit die Aufgabe, die in der Speichereinheit angeordnete Vielzahl von Akkumulatoren bzw. wiederaufladbaren Batterien so in Reihe bzw. parallel zu schalten, dass überschüssig erzeugte Energie in den Akkumulatoren spannungs- und stromstärkeangepasst gespeichert werden kann. Somit kann der erfindungsgemäße Pufferspeicher auch als eine Art Gleichspannungswandler angesehen werden, da er die Hochleistungsspannung, welche vom Generator zur Verfügung gestellt wird, in eine niedrigere Gleichspannung wandeln kann, die vom Verbraucher verwertbar ist. Jedoch wird erfindungsgemäß die für den Verbraucher zuviel erzeugte elektrische Energie nicht in eine Verlustleistung umgewandelt, wie das beispielsweise bei Gleichstromteilerschaltungen der Fall ist, sondern kann für die Abgabe zu einem späteren Zeitpunkt im erfindungsgemäßen Pufferspeicher akkumuliert bzw. abgespeichert werden.

Bei der Berechnung der Anzahl an Akkumulatoren, speziell bei der Berechnung wie viele Akkumulatorenstränge - d.h. in Serie geschaltete Akkumulatoren - notwendig sind, ist unter anderem die Lebensdauer von Akkumulatoren zu berücksichtigen. Handelsübliche Akkumulatoren, wie sie in dem erfindungsgemäßen Pufferspeicher verwendet werden können, haben ihre maximale Lebensdauer dann, wenn sie erfahrungsgemäß mit einem Strom beladen werden, der in etwa 10% vom Betrag des Wertes der Gesamtkapazität des Akkumulators entspricht. Bei einem Entladen kann dem Akkumulator jedoch falls notwendig ein Strom entnommen werden, der dem Wert der Gesamtkapazität eines Akkumulators entspricht. Man spricht hierbei von der Gesamtkapazität 1 CA, welches der im Akkumulator gespeicherten Gesamtenergie entspricht. Dabei wird der Wert 1 CA dann erreicht, wenn dem Akkumulator ein Strom zu- oder abfließt, welcher in der Lage ist, den Akkumulator innerhalb einer Stunde zu be- oder entladen. Hat ein Akkumulator beispielsweise eine maximale Kapazität von 2600 mAh, so ist ein 1 CA äquivalenter Strom erreicht, wenn dem Akkumulator 2,6 A zu- oder abgeführt werden. Wie vorher bereits ausgeführt, erreicht ein Akkumulator seine maximale Lebensdauer erfahrungsgemäß dann, wenn der Strom, welcher zum Laden oder Beladen verwendet wird, 0,1 CA nicht übersteigt, was im vorgenannten Beispielfall 0,26 A oder 260 mA entsprechen würde.

Aufgrund der beabsichtigten bzw. für die Energieerzeugung vorgesehenen Lebensdauer der elektrischen Energieerzeugungsanlage, welche beispielsweise der Amortisationszeit der Energieerzeugungsanlage entspricht, ist bei der Berechnung der Anzahl an seriellen Akkumulatorsträngen, die parallel geschaltet werden müssen, einzubeziehen. Somit sind bevorzugt so viele Stränge an parallel schaltbaren Akkumulatoren vorzusehen, dass bei maximaler Stromstärke, die durch die Gleichstromenergieerzeugungsanlage erzeugt werden kann, nur ein 0,1 CA äquivalenter Strom durch jeden einzelnen Akkumulatorstrang fließt, damit die maximale Lebensdauer der eingesetzten Akkumulatoren erreicht werden kann.

Die überschüssig erzeugte und in den Akkumulatoren gespeicherte Energie kann somit über tausende von Ladezyklen der Akkumulatoren durch Verwendung des erfindungsgemäßen Pufferspeichers in Energieerzeugungsanlagen jederzeit flexibel zu einem späteren Zeitpunkt verwendet werden, ohne dass auf eine noch so geringe Energieerzeugungsmöglichkeit verzichtet werden muss. Im Falle, dass die Generatorleistung kleiner ist als die Verbraucherleistung, werden die Akkumulatoren von der Anschluss- und Schalteinheit so zusammengeschaltet, dass die entsprechende notwendige Anzahl an Akkumulatoren die fehlende Spannungsdifferenz und/oder Stromstärkedifferenz bereitstellen und diese zur der Generatorleistung aufaddiert wird, um so die vom Verbraucher abgerufene Leistung im Zusammenspiel von Generator und Pufferspeicher bereitzustellen.

Die entsprechend notwendige Anzahl an Akkumulatoren beim Beladen als auch beim Entladen bestimmt sich aus der Differenzenergie, welche in den entsprechenden Betriebszuständen zum Speichern zur Verfügung steht oder zum Betrieb des Verbrauchers noch zusätzlich benötigt wird. Hierbei werden von der Anschluss- und Schalteinheit soviel wiederaufladbare Batterien in Serie geschaltet, dass die hierfür notwendige Betriebsspannung in der Speichereinheit bereitgestellt wird, wobei gleichzeitig über eine ausreichende Parallelschaltung der Batteriestränge (= in seriegeschalltete Akkumulatoren) die notwendige Kapazität für die Aufnahme oder Abgabe der Stromstärkedifferenz gewährleistet ist. Damit ist der Stromfluss zwischen Generator und Verbraucher ausgeglichen, bzw. kann auf den vom Verbraucher angeforderten Niveau gehalten werden, da der Pufferspeicher in jeder Situation die Energiedifferenz zwischen erzeugter elektrischer Leistung und nachgefragter elektrischer Leistung flexibel ausgleicht, indem eine Vielzahl von Akkumulatoren parallel und in Serie schaltbar sind, so dass keine Energie verloren geht. Damit steigt der Gesamt-Wirkungsgrad einer Gleichstromenergieerzeugungsanlage durch Verwendung eines erfindungsgemäßen Pufferspeichers.

Liefert der Generator, beispielsweise eine Windkraftanlage oder eine Photovoltaikanlage, bei optimalen Wetterbedingungen eine hohe elektrische Leistung, welche nicht komplett vom Verbraucher aufgenommen werden kann, so wird die "zuviel" vom Generator erzeugte Leistung von der Anschluss- und Schalteinheit zu den Speichereinheiten geleitet, wobei das "Zuviel" an Spannung die Anzahl der in Reihe geschalteten Akkumulatoreinheiten bestimmt und ein "Zuviel" an Stromstärke die Anzahl an parallel geschalteten Akkumulatorensträngen, welche wiederum in Serienschaltung vorliegen, bestimmt. D.h. die Anzahl der benötigten Akkumulatoren wird jeweils aus der Differenzspannung bzw. Differenzstromstärke bestimmt und von der Anschluss- und Schalteinheit entsprechend den Vorgaben aus der abgefragten Verbraucherleistung und der zur Verfügung stehenden Generatorleistung errechnet.

Somit kann die Anschluss- und Schalteinheit flexibel sowohl auf Schwankungen in der Energierzeugung als auch auf Schwankungen in der Energieabgabe, d.h. Verbrauchernachfrage, reagieren.

Das Funktionsprinzip des erfindungsgemäßen Pufferspeichers lässt sich mit einem Flusslauf vergleichen, in den eine Flasche gehalten wird. Weist die Öffnung der Flasche flussaufwärts, fließt Wasser in die Flasche. Weist die Öffnung der Flasche flussabwärts so läuft Wasser aus der Flasche, solange Wasser darin ist. Die Größe der Öffnung gibt dabei den Widerstand, d. h. die Spannung, für die Befüllung bzw. Entleerung der Flasche vor. Ist die Öffnungsgröße variabel einstellbar, so ist auch der Befüll- bzw. Entleerwiderstand einstellbar. Je nach Neigung der Flasche im Flusslauf kann die Befüll- und Entleergeschwindigkeit gesteuert werden, was übertragen auf den Pufferspeicher der Stromstärke entspricht. Je nachdem, wie die Flasche in den Fluss gehalten wird, kann dem Fluss Wasser entnommen oder hinzugefügt werden. Dies kann in Abhängigkeit vom Wasserstand im Fluss oder von der bspw. von einem Stauwerk aufnehmbaren Wassermenge gesteuert werden. Die Größe der Flasche verkörpert in diesem Beispiel die Speicherkapazität.

Für den Betriebszustand des erfindungsgemäßen Pufferspeichers, in dem die zuviel erzeugte Leistung im Pufferspeicher gespeichert wird und soviel Energie an einen Verbraucher abgegeben wird, wie dieser aufnehmen kann, kann man sich anschaulich eine Flasche vorstellen, die in ihrem Flaschenboden zusätzlich ein gegenüber der normalen Flaschenöffnung kleineres Abflussöffnung zeigt, aus der die für den Verbraucher verwertbare Menge Wasser (Energie) ausströmen kann. Fließt durch die Flaschenkopföffnung mehr Wasser in den Behälter als durch die Bodenöffnung herauslaufen kann, so wird das Zuviel an Wasser in der Flasche akkumuliert.

Umgekehrt (Flaschenöffnung weist stromabwärts), wenn durch die kleine Öffnung im Flaschenboden nur wenig Wasser in die Flasche eintritt so kann zuvor in der Flasche gespeichertes Wasser durch die Flaschenhalsöffnung auf die hinzufließende Menge Wasser aufaddiert ausfließen. Mit diesem anschaulichen Beispiel sind die Betriebszustände i) und iii), bei denen die Generatorleistung von der nachgefragten Verbraucherleistung abweicht, anschaulich dargestellt. Jedoch beschränkt dieses Anschauungsbeispiel nicht den Erfindungsgedanken und soll nur das zugrundeliegende Funktionsprinzip anschaulich darstellen.

Erfindungsgemäß werden vom Pufferspeicher insgesamt soviel Speichereinheiten vorgehalten, dass eine Maximalleistung, beispielsweise eine Tagesleistung einer Photovoltaikanlage, in der Speichereinheit aufgenommen werden kann, wenn der angeschlossene Verbraucher, beispielsweise ein Stromverteilernetz, keine elektrische Energie aufnehmen kann. Gerade an sehr sonnigen Tagen im Frühling und im Herbst, bei denen die Außentemperaturen nicht zu hoch sind, kann es bspw. zu einem Überangebot an elektrischer Energie aus Photovoltaikanlagen kommen und der Stromnetzbetreiber kann dazu gezwungen sein, zum Schutz vor Überlastung der Stromnetze, die Entgegennahme der von den Photovoltaikanlagen erzeugten elektrischen Energie zu begrenzen bzw. abzulehnen. Jedoch kann die nicht abnehmbare Energie in einem erfindungsgemäßen Pufferspeicher gespeichert werden und beispielsweise nachts durch Entladen der Speichereinheit an den Verbraucher abgegeben werden. Es muss also auf keine erzeugbare Energie verzichtet werden. Im obigen Fall kann die "zuviel" erzeugte Energie an das Stromnetz des Betreibers bspw. in den Abend- oder Nachtstunden abgegeben werden, welcher dieser ggf. zum Aufbau potentieller Energie verwendet.

Eine weitere Wirkungsgradverbesserung für die gesamte Energieversorgungsanlage kann damit erreicht werden, dass Energie, welche nicht sofort vom Verbraucher abgerufen wird, aufgrund nicht notwendiger Gleichstrom-Gleichstrom-Wandler in einer effektiven Form mit hohem Wirkungsgrad speicherbar ist und diese Energie in Energieerzeugungssenken aus dem Pufferspeicher entnommen werden kann. Damit steigt der Wirkungsgrad für die Energieerzeugungsanlage.

Für die Einspeisung von elektrischer Energie, beispielsweise in ein Stromversorgernetzwerk, finden so genannte MPP-Regler Anwendung, die im gleichnamigen MPP-Trackingverfahren (Maximum Power Point-Tracking) die maximale Energie in Abhängigkeit der erzeugbaren Gleichspannung und der einspeisbaren Gleichstromstärke bestimmt. Dieses fachübliche MPP-Trackingverfahren läuft während einer Energieerzeugung permanent und periodisch ab und regelt den einspeisbaren Energiestrom. Dabei regelt das MPP-Trackingverfahren die in ein Stromnetz einspeisbare Energiemenge beispielsweise herunter, wenn eine Wolke die Photovoltaikanlage verdeckt. Ist die Wolke vorbeigezogen und liefert die Gleichspannungserzeugungsanlage (Photovoltaikanlage) wieder volle Leistung. Der Regler braucht eine gewisse Zeit bis er den MPP (Maximum Power Point) erneut ermittelt hat und die von der Photovoltaikanlage erzeugte Energie in das Stromnetz einspeisbar ist. Die in dieser Zeit erzeugte Energie geht verloren, da sie nicht einspeichbar ist.

Mit dem erfindungsgemäßen Pufferspeicher in der Plusleitung zwischen Gleichspannungserzeugungsanlage und Gleichstromverbraucher kann eine vorübergehende Abschattung der Photovoltaikanlage durch den Pufferspeicher kompensiert werden, wodurch der MPP-Regler entlastet wird. Somit kann durch Verwendung des erfindungsgemäßen Pufferspeichers ein MPP-Regler verwendet werden, welcher langsamer auf Änderungen der zur Verfügung stehenden Energie reagiert, da temporäre kurzfristige Schwankungen in der Energieabgabe vom erfindungsgemäßen Pufferspeicher abgefangen werden. Eine nervöse MPP-Regelung, so wie sie bei derzeitigen Photovoltaikanlagen, insbesondere bei einem Sonne-Wolken-Mix auftreten, kann dadurch vermieden werden und einem Stromnetz eine konstante Energieübertragung bereitgestellt werden. Damit ist sowohl der Wirkungsgrad in der Energieerzeugung als auch bei der Energieübertragung stark verbessert. Der verwertbare Energieertrag ist optimiert.

Der erfindungsgemäße Pufferspeicher kann aber auch dazu verwendet werden, um die Energieniveaus verschiedener Energieerzeugungsanlagen, wie z.B. in verschiedenen Winkeln aufgeständerten Solarmodulen oder bei verschiedenen Konzepten zur Energieerzeugung, wie z.B. ein Mix aus Sonnenenergie, Windenergie oder/und Wellenenergie, so auszuregeln, dass eine kleinste gemeinsame Energiemenge einem Stromverbraucher, insbesondere einem Stromverbrauchernetz, zur Verfügung gestellt wird. Die von den einzelnen Anlagen gegebenenfalls mehr erzeugte Energie kann in den einzelnen Energieerzeugungsanlagen zugeordneten Pufferspeichern gespeichert werden und zeitverzögert bzw. im Anschluss an die Energieerzeugung an einen Stromverbraucher abgegeben werden.

Die oben genannten Beispiele sind nicht auf eine bestimmte Art der Energieerzeugung beschränkt und dienen lediglich der anschaulichen Darstellung der Erfindungsidee bzw. der bevorzugten Anwendungsfälle.

Der oben geschilderte Fall für ein Stromnetz eines Stromnetzbetreibers zur Versorgung von Haushalten bzw. Industrien kann analog auch auf die direkte Energieeinspeisung in private Haushalte angewendet werden. Hierbei ist es von Vorteil, dass bspw. ein so großer Energiespeicher, d.h. eine dementsprechende Anzahl an wiederaufladbaren Batterien bereitgestellt wird, dass beispielsweise ein Wochenbedarf oder 10-Tagesbedarf eines privaten Haushalts aus dem Energiespeicher bedient werden kann. Dabei ist es Aufgabe der Anschluss- und Schalteinheit, im Sinne eines Batteriemanagements, die einzelnen Akkumulatoren oder wiederaufladbaren Batterien während günstiger Energieerzeugungsvoraussetzungen geeignet zu beladen und deren Entladung verbrauchsgemäß bzw. flexibel der Nachfrage entsprechend zu entladen. Dies kann beispielsweise im MPP-Verfahren oder verbrauchsangepasst erfolgen.

Wie oben bereits beschrieben, passt die Anschluss- und Schalteinheit die Anzahl an parallel und seriell zum Einsatz kommenden Akkumulatoren der zur Verfügung stehenden speicherbaren Energie bzw. der nachgefragten Verbraucherleistung in deren Anzahl flexibel an, wobei hier sowohl die Anzahl an parallelen als auch die Anzahl an seriell zu- und abschaltbaren Akkumulatoren veränderbar ist. Wieviel Akkumulatoren jeweils aktiv geschaltet werden müssen, hängt von den zur Anwendung kommenden Akkumulatorarten ab, wobei alle Akkumulatorarten vom Erfindungsgedanken umfasst sind, ob Li-Ionen, Ni-Cad oder ähnliche Akkumulatoren. Welche Akkumulatoren zur Anwendung kommen ist für die Verwirklichung des Erfindungsgedankens unerheblich. Ebenso unerheblich ist die Reihenfolge, in der die Akkumulatoren be- und entladen werden, wobei bevorzugt die Akkumulatoren durchgewechselt werden, um die Lebensdauer der Speichereinheit möglichst hoch zu halten.

Eine Möglichkeit die maximale Anzahl an zu- und abschaltbaren Akkumulatoren zu bestimmen liegt darin, die maximale Spannung und/oder maximale Stromstärke zu bestimmen, die an der Generatorausgangsseite bzw. an der Anschlussseite der Anschluss- und Schalteinheit anlegbar ist. Dies wird oftmals für eine Photovoltaikanlage dadurch bestimmt, dass die für die Gleichstromerzeugung optimalen Wetterbedingungen herrschen, wie beispielsweise an einem wolkenlosen Sonnentag mit niedrigen Temperaturen, insbesondere im Frühling oder im Herbst. Selbstredend müssen hierbei die Solarpanele optimal zur Sonne ausgerichtet sein. Bei Windkraftanlagen wird die maximal erzeugbare elektrische Energie zumeist durch die von der Windkraftanlage beschädigungsfrei verkraftbare Windstärke vorgegeben. Im Falle von Wellenkraftwerken wird der limitierende Faktor normalerweise die Wellenhöhe sein. Andere Stromerzeugungsanlagen, die alternativ zur Verbrennung von fossilen Brennstoffen oder der Spaltung atomaren Materials elektrische Gleichspannungsenergie erzeugen, haben ebenfalls ihre eigene Charakteristik, wodurch deren maximale Leistung begrenzt ist. Die maximal erzeugbare Leistung ist jedoch ein möglicher Ansatzpunkt, die für den Pufferspeicher notwendige Anzahl an Akkumulatoren zu bestimmen. Nichtsdestotrotz wird man, zum Schutz der Akkumulatoren, eine Batterieüberwachung vornehmen, welche bevorzugt ebenfalls in die Anschluss- und Schalteinheit integriert wird. Die Batteriemanagementsteuerung, welche von der Anschluss- und Schalteinheit übernommen wird, kann bei Überlastung der Akkumulatoren weitere Akkumulatoren - sofern vorhanden - zuschalten oder, wenn alle Akkumulatoren bereits verschaltet sind, die Speichereinheit von der Anschluss- und Schalteinheit trennen, wobei der Generator weiterhin Energie an den Verbraucher abgeben kann. Die Energieerzeugungsanlage muss deshalb nicht stillgelegt werden. Sie kann weiter herkömmlich ohne Energiepufferung betrieben werden.

Der erfindungsgemäße Pufferspeicher findet bevorzugt Anwendung in elektrischen Schaltungsanordnungen an Gleichstromerzeugungsanlagen, die mittels eines Gleichstrom-/Wechselstromwandlers den erzeugten Gleichstrom in Wechselstrom zur Versorgung eines wie auch immer gearteten Verbrauchers umwandeln. Dabei kann der Verbraucher ein stationäres Stromnetz sein oder auch ein mobiles Fahrzeug. Vom Erfindungsgedanken sind ferner Verbraucherleistungen im einstelligen Wattbereich genauso umfasst, wie Gleichspannungsleistungen im Kilo- oder Megawattbereich, wobei auch eine Anwendung im Gigawattbereich vorstellbar ist, sofern die hierfür notwendige Akkumulatoren-Technologie zur Verfügung steht. Der hierbei limitierende Faktor ist in der Leistungsfähigkeit bzw. Anzahl der einsetzbaren Akkumulatoren zu sehen, die jedoch ständig verbessert wird.

Die Erfindung wird nun Anhand von Figuren, die Ausführungsbeispiele des erfindungsgemäßen Pufferspeichers zeigen, dargestellt. Die dargestellten Ausführungsformen begrenzen hierbei jedoch nicht den Erfindungsgedanken. Im Einzelnen zeigen:
- Figur 1: eine schematische Darstellung eines ersten Ausführungsbeispiels der Erfindung, in der alle Systeme stromlos geschaltet sind (Sicherheitszustand).
- Figur 2: eine schematische Darstellung eines zweiten Ausführungsbeispiels der Erfindung, in dem der erfindungsgemäße Pufferspeicher geladen wird.
- Figur 3: eine schematische Darstellung einer im erfindungsgemäßen Pufferspeicher beispielsweise verwendeten Speichereinheit
- Figur 4: einen schematische Darstellung eines dritten Ausführungsbeispiels der Erfindung, in dem der erfindungsgemäße Pufferspeicher entladen wird, wobei eine Generatorspannung am erfindungsgemäßen Pufferspeicher anliegt.
- Figur 5: eine schematische Darstellung eines vierten Ausführungsbeispiels der Erfindung, in dem der erfindungsgemäße Pufferspeicher entladen wird, wobei keine Generatorspannung am erfindungsgemäßen Pufferspeicher anliegt.
- Figur 6: eine schematische Darstellung eines fünften Ausführungsbeispiels der Erfindung, mit einer gegenüber Figur 1 bis 3 geänderter Anordnung der Anschluss- und Schalteinheit.

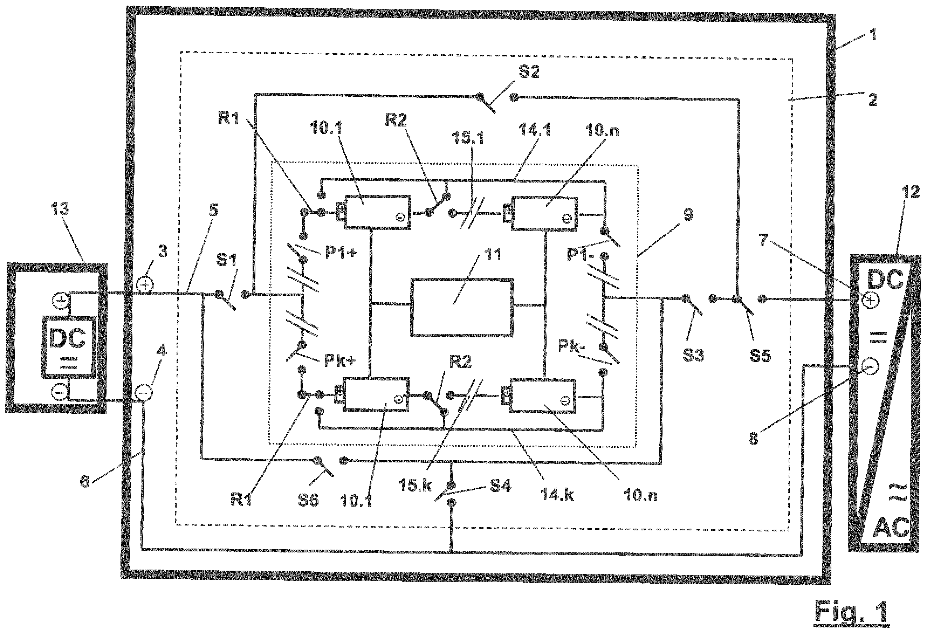

Figur 1 zeigt schematisch ein erstes Ausführungsbeispiel der Erfindung, in den der Pufferspeicher 1 in einem abgesicherten Zustand ist, bei dem alle Schalter offen sind. Der erfindungsgemäße Pufferspeicher 1weist auf seiner Anschlussseite einen Pluspol 3 und einen Minuspol 2 auf. Über eine Plusleitung 5 und eine Minusleitung 6 ist der erfindungsgemäße Pufferspeicher 1 mit einem Gleitstromverbraucher 12 verbunden. Dabei ist über den anschlussseitigen Minuspol 4 die Minusleitung 6 des Pufferspeichers 1 der Minuspol 8 des Gleichstromsverbrauchers 12 direkt verbindbar. In der Plusleitung 5 des Pufferspeichers 1 ist eine Anschluss- und Schalteinheit 2 angeordnet, über welche die Plusleitung 5 mit dem Pluspol 7 des Gleichstromverbrauchers 12 verbunden ist. In der Anschluss- und Schalteinheit 2 ist eine Speichereinheit 9 eingebunden, die über elektrische Leitungen durch Schalter S1 bis S6 so in die Plusleitung 5 zwischen Gleichstromgenerator 13 und Gleichstromverbraucher 12 eingebunden werden kann, dass die Speichereinheit 9 sowohl mit elektrischer Energie be- als auch entladbar ist. Die Speichereinheit 9 ist dabei nicht geerdet, wie oftmals im Stand der Technik ausgeführt, und benötigt daher auch keinen DC/DC-Wandler (Gleichspannungswandler) um die Potentialdifferenz zwischen Hochspannungsseite und Erde herabzusetzen. Die Speichereinheit 9 kann daher beim Weiterleiten von elektrischer Energie von der Generatoreinheit 13 an den Verbraucher 12 mit elektrischer Energie aufgeladen werden, wenn die vom Generator 13 zur Verfügung gestellte Energie größer ist als die vom Verbraucher 12 benötigte Energie. Der "Überschuß" an Energie kann dann in der Speichereinheit 9 abgeladen werden. Erfindungsgemäß ist die Speichereinheit 9 auf der Hochspannungsseite einer Energiebereitstellungsanlage angeordnet und wirkt mit ihren in Reihe geschalteten Akkumulatoren wie ein Gleichspannungswandler für die von der Gleichspannungserzeugungsanlage 13 erzeugbare Gleichspannung zum Betreiben/Versorgen eines Gleichspannungsverbrauchers 12.

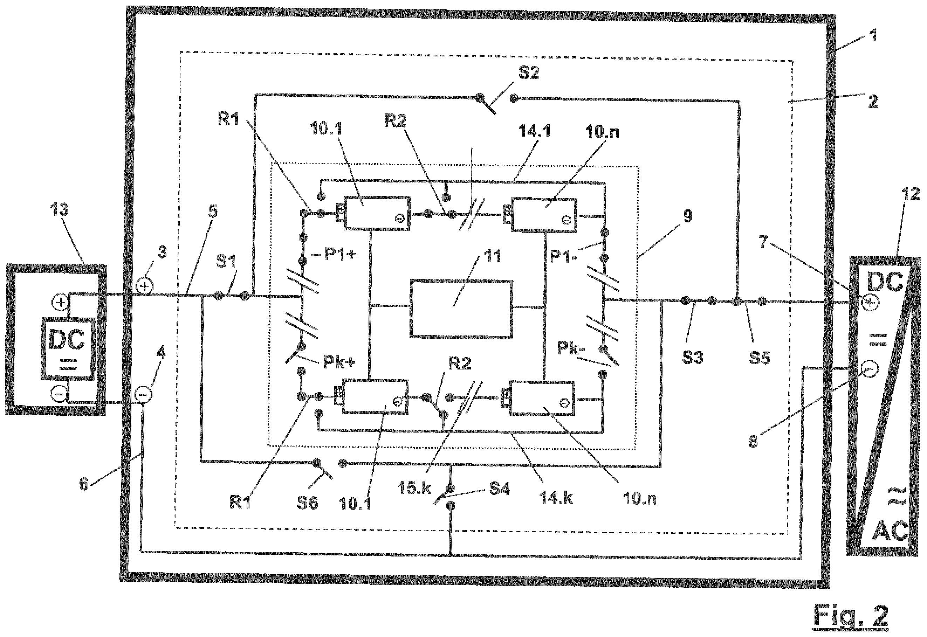

Zum Laden der Speichereinheit 9 wird, wie im Schaltschema in Figur 2 dargestellt, der Schalter S1 geschlossen, so dass der Pluspol 3 der Speichereinheit 9, d.h. der darin parallel und seriell geschalteten Akkumulatoren 10, mit dem Pluspol 3 der Generatoreinheit 13 verbunden ist und so elektrische Energie in die Speichereinheit 9 fließen kann. Gleichzeitig ist der Schalter S3 geschlossen und verbindet den Minuspol der Speichereinheit 9 - d. h. der Akkumulatoren 10 - mit dem Pluspol 7 des Gleichstromverbrauchers 13, sofern Schalter S5 ebenfalls geschlossen ist. Der Schalter S5 hat die Aufgabe den Verbraucher 13 an die Energieerzeugungsanlage anzubinden oder abzuschalten oder, falls mehrere Verbraucher vorhanden sind, die mehreren Verbraucher ggf. wechselweise mit dem erfindungsgemäßen Pufferspeicher zu verbinden, bzw. von diesem zu trennen. In der Darstellung gemäß Figur 1 ist aus Gründen der Übersichtlichkeit nur ein Verbraucher dargestellt. Eine Anordnung eines weiteren Verbrauchers ist jedoch fachüblich.

Damit das oben geschilderte System bei geschlossenen Schaltern S1, S3 und S5 (vgl. Figur 2) im Gleichgewicht ist - also im Betriebszustand Laden bei gleichzeitiger Weiterleitung von Energie an den Verbraucher 12 - muss in der Speichereinheit 9 die Differenz der Spannungen, die am - Generator 13 anliegt und der Spannung, die vom Verbraucher 12 angefordert wird, von der Speichereinheit 9 aufnehmbar sein. Hierzu werden bspw. über das Batteriemanagement 11 bzw. über die Anschluss- und Schalteinheit 2 mittels der Schalter R1 bis Rn so viele Akkumulatoren 10.1- bis 10.n in Reihe geschaltet, dass die Summe der aufaddierten Akkumulatorenspannungen den Betrag der Differenzspannung zwischen Gleichspannungserzeuger und Verbraucher ergibt. N ist dabei die Anzahl an maximal zur Verfügung stehender Akkumulatoren, die in Reihe geschaltet werden können und die bevorzugt in Summe die maximal vom Generator 13 erzeugbare Spannung aufnehmen können. Gleichzeitig schaltet die Anschluss- und Schalteinheit 2 mittels der Schalter P1 bis Pk so viele Stränge 15 von Akkumulatoren 10 (= seriell geschaltete Akkumulatoren 10) parallel, bis die Stromstärke von den parallel geschalteten Akkumulatorensträngen 15 als üblicher Ladestrom (üblicherweise 1/10 der Ladekapazität) aufgenommen werden kann. Dabei verweist gemäß der Figuren 1 bis 6 das Bezugszeichen 15.1 auf den ersten Akkumulatorstrang 15.1 mit in Serie angeordneten/geschalteten Akkumulatoren 10. K entspricht der Anzahl maximal parallel schaltbarer Akkumulatorenstränge 15.k, wobei die darin in Reihe geschaltet geschaltete Anzahl von Akkumulatoren auch 1 betragen kann (d. h. k=1).

Die Differenzstromstärke, die vom Gleichstromgenerator 13 bereitgestellt, aber vom Gleichstromverbraucher 12 nicht abgenommen wird, wird somit von den parallelen Akkumulatorsträngen 15.1 bis 15.k aufgenommen. Das Batteriemanagement 11 des Pufferspeichers 1, das bevorzugt innerhalb der Anschluss- und Schalteinheit 2 angeordnet ist, regelt die Anzahl der wiederaufladbaren Batterien 10, die notwendig sind, um die vom Generator "zuviel" generierte elektrische Energie in der Speichereinheit 9 in gespeicherte Energie umzuwandeln und um eine Verlustleistung zu vermeiden. Damit wird die vollständige von der Gleichstrom-Energieerzeugungsanlage generierte Energie verwertet und eventuell zuviel generierte Energie, welche der Verbraucher 12 nicht aufnehmen kann, für eine zeitversetzte Abgabe gespeichert. Die in der Speichereinheit 9 gespeicherte Energie kann zu einem späteren Zeitpunkt abgegeben werden, wenn bspw. die Generatorspannung unterhalb der Spannung fällt, die der Verbraucher anfordert.

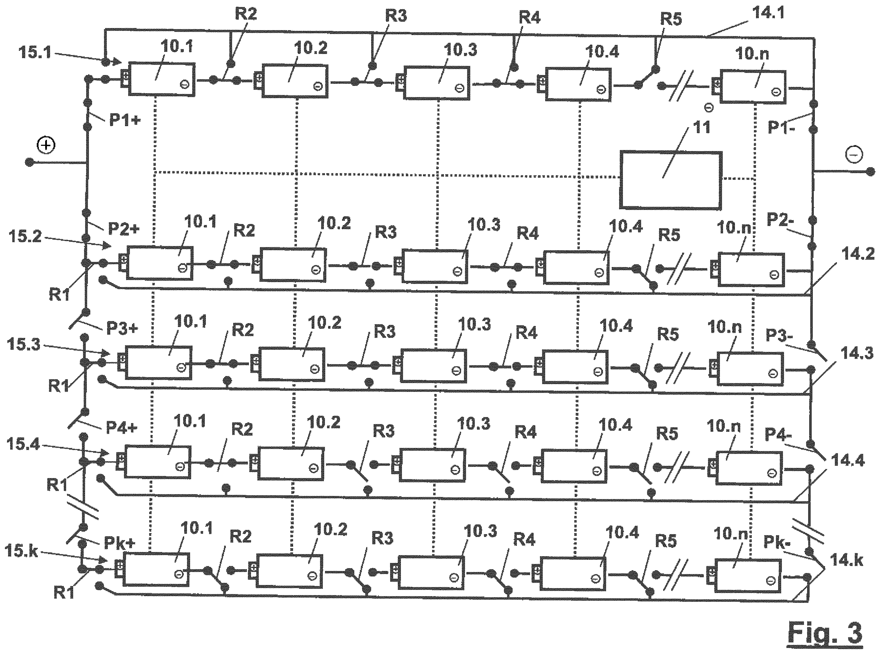

In Figur 3 ist zur Veranschaulichung ihrer Funktionsweise eine Speichereinheit 9 als Einzelheit dargestellt. In Figur 3 ist sowohl eine Matrixstruktur für die verwendeten Akkumulatoren 10 als auch für die verwendeten Schalter P1 bis Pk sowie R1 bis Rn zu erkennen. Dabei sind jedem Akkumulatorstrang 15.x zwei Schalter Px+ und Px- zugeordnet, von denen einer auf der Plusseite und einer auf der Minusseite der Speichereinheit 9 angeordnet ist, um den Akkumulatorstrang 15.x in die Akkumulatorenmatrix für die Aufnahme oder Abgabe elektrischer Energie zu- oder abzuschalten. Innerhalb der Akkumulatorenstränge 15.1 bis 15.k sind jeweils Schalter R1 - Rn zwischen je zwei Akkumulatoren 10 angeordnet, um die Akkumulatoren 10 seriell verbinden zu können oder den Akkumulatorstrang 15.x in seiner Anzahl an Akkumulatoren zu begrenzen. Die Schalter R1 bis Rn können dabei in eine Stellung verbracht werden, in der der Minusausgang des letzten zur Aufnahme oder Abgabe von elektrischer Energie benötigten Akkumulators 10 mit einer dem Akkumulatorstrang 15.x zugeordneten Überbrückungsleitung 14.x verbunden wird. Bei k vorhandenen Akkumulatorsträngen sind also auch k Bypassleitungen 14.1 bis 14.k vorhanden. Hierbei stellt k die maximale Anzahl an parallel schaltbaren Akkumulatorsträngen 15 dar. Mit dieser Anordnung von Schaltern P1 bis Pk zum Parallelschalten von Akkumulatorsträngen 15 und Schaltern R1 bis Rn zum Reihenschalten von Akkumulatoren 10 innerhalb der Akkumulatorstränge können flexibel immer so viele Akkumulatoren 10 in den Stromkreis bzw. in die Plusleitung zwischen Gleichstromerzeuger 13 und Gleichstromverbraucher 12 geschaltet werden, dass die Energieströme (erzeugte Energie, gespeicherte Energie, verbrauchte Energie) in Summe oder Differenz - je nach Betriebszustand der elektrischen Gesamtanlage - ausgeglichen sind.

In dem in Figur 3 zeigt ein Beispiel zur Verdeutlichung der Akkumulatoren- und Schaltermatrix an einem einfachen Schaltbeispiel für die Speichereinheit 9 mit vier in Serie geschalteten Akkumulatoren 10 für die Aufnahme oder Abgabe von elektrischer Energie. Hierbei sind die Schalter R1 bis R4 geschlossen und die Schalter P1+, P1- und P2+, P2- sowohl auf der Positivseite als auch auf der Negativseite der Speichereinheit geschlossen, um die beiden Akkumulatorstränge 15.1 und 15.2 parallel zu schalten. Die jeweiligen Schalter R5 sind bezüglich der weiteren Serienschaltung von Akkumulatoren 10 geöffnet und verbinden die Minuspole der ersten beiden Akkumulatorenstränge 15.1 und 15.2 mit der zugehörigen Bypassleitung 14.1 und 14.2, welche den Minuspol der Speichereinheit 9 bilden, der direkt mit dem Pluspol 7 des Gleichstromverbrauchers 12 verbindbar ist.

Mit dem einfachen, in Figur 3 dargestellten Beispiel ist nachvollziehbar, dass die Anzahl der parallel und seriell geschalteten Akkumulatoren 10 in der Speichereinheit 9 flexibel an die zu speichernde Energie bzw. an die abzugebende Energie angepasst werden kann und zwar sowohl an die Schwankungen in der Energieerzeugung, als auch an Schwankungen in der Energieabnahme und dies sowohl in der Höhe der Spannungen und Stromstärken als auch über den Zeitverlauf sowie an die Lebensdauer der Akkumulatoren 10 angepasst. Damit wird erreicht, dass die Energieflüsse zu jedem Zeitpunkt ausgeglichen sind und verschiedene Akkumulatoren 10 flexibel ansprechbar sind. Liefert der Gleichspannungserzeuger 13 - ausgehend von der in Figur 3 schematisch dargestellten Situation eine höhere Spannung, weil bspw. die Windstärke oder die Wellenhöhe zunimmt, so kann durch Schließen der Schalter R5 in den Akkumulatorsträngen 15.1 und 15.2 die zusätzliche anfallende Gleichspannung aufgefangen werden, wenn der Gleichstromverbraucher in seiner Stromaufnahme unverändert bleibt. Steigt Eingangsseitig die Gleichstromstärke, so können ein oder meherere weiterer Akkumulatorenstränge 15.3 bis 15.k durch Schließen der jeweiligen Schalter P3+ bis Pk+ und P3- bis Pk- zur Erhöhung der Speicherkapazität hinzugeschaltet werden, wobei die Stränge 15.3 bis 15.k die gleiche Anzahl an seriell geschalteten Akkumulatoren aufweisen, wie die Stränge 15.1 und 15.2. Analoges gilt umgekehrt, falls eine geringere Speicherkapazität bzw. Spanungsaufnahme durch die Speichereinheit 9 erreicht werden soll.

Es kann ferner der Fall eintreten, dass der Verbraucher 12 keine Energie aufnehmen kann. In diesem Fall kann, bei geeigneter Auslegung des erfindungsgemäßen Pufferspeichers 1 und der darin angeordneten und geschalteten Akkumulatoren10, sämtliche vom Generator 13 zur Verfügung gestellte Energie im Pufferspeicher 1 bzw. in der Speichereinheit 9 abgespeichert werden. Hierzu ist - ausgehend vom in dem in Figur 2 dargestellen Schaltzustand - der Schalter S5 zu öffnen und zusätzlich der Schalter S4 zu schließen, um eine Verbindung der Minuspole der Akkumulatoren 10 zum Minuspol 4 der Anschluss- und Schalteinheit 2 und somit zum Generator 13 herzustellen. Idealerweise kann in dem erfindungsgemäße Pufferspeicher 1 soviel und solange elektrische Energie gespeichert werden, bis der Verbraucher 12 wieder Energie entgegennehmen kann, so dass der Pufferspeicher 9 entladbar ist. Das ist dann der Fall, wenn die vom Verbraucher 12 nachgefragte Energie größer ist als die von Generator 13 zur Verfügung gestellte Energie. Ist der erfindungsgemäße Pufferspeicher 1 zumindest teilentladen steht er für eine neue (Teil-)Beladung wieder zur Verfügung.

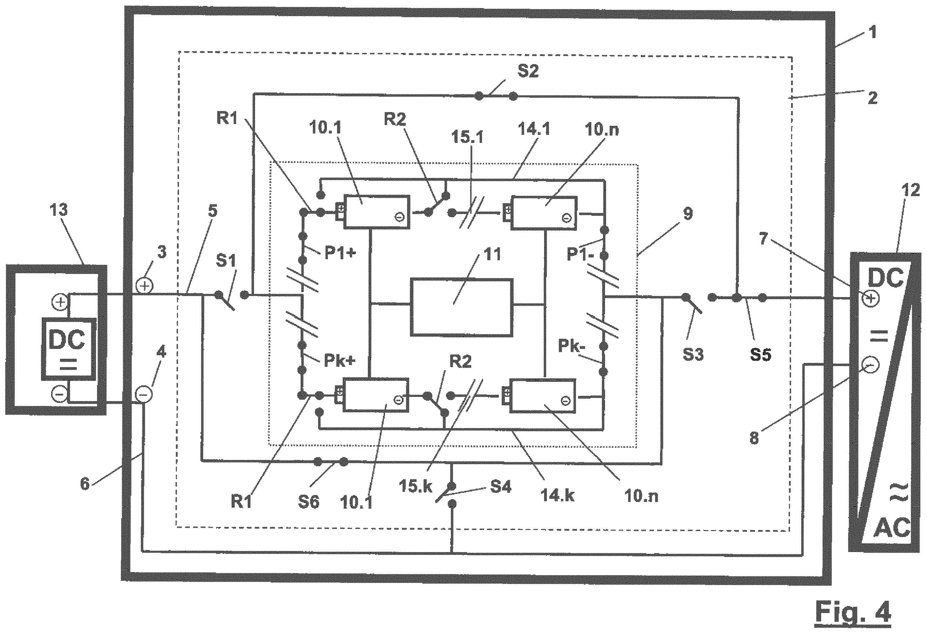

Beim Entladen, vgl. Figur 4, muss auf die niedrigere Generatorleistung elektrische Energie aus dem Pufferspeicher 9 aufaddiert werden, wobei hier wiederum so viel Akkumulatoren 10 parallel und seriell geschaltet werden müssen, dass die notwendige Differenzenergie zusammen mit der Generatorenergie den Energiebedarf des Verbrauchers 12 deckt. Auch hier müssen, wie im Fall des Ladens der Speichereinheit 9, so viele Akkumulatoren 10 in Reihe und so viele Akkumulatorenstränge 15 parallel geschaltet werden, dass die Differenzenergie von der Speichereinheit 9 abgegeben werden kann. Nach und nach können von der Anschluss- und Schalteinheit 2 weitere Akkumulatoren hinzugeschaltet werden, wenn zuvor geschaltete Akkumulatoren leer sind oder ihre Mindestladungskapazität erreicht haben. Dies kann solange erfolgen bis der vollständige Speicher energieleer ist.

Zur Entnahme von Energie aus der Speichereinheit 9, bei gleichzeitiger Energiezufuhr aus dem Generator 13 werden, wie in Figur 4 dargestellt, die Schalter S6, S2 und S5 geschlossen. Die Schalter S1 und S3 sind geöffnet. In diesem Betriebszustand ist der Minuspol der Speichereinheit 9 mit dem Pluspol 3 der Anschluss- und Schaltereinheit 2 d. h. mit dem Pluspol der Generatoreinheit 13 verbunden, wodurch die Speichereinheit 9 mit dem Generator 13 in Reihe geschaltet ist, sodass sich die Spannungen addieren. Der Schalter S4 bleibt in diesem Betriebszustand geöffnet, da die Minusleitung 6 der Anschluss- und Schaltereinheit 2 den Verbraucher 12 direkt mit dem Generator 13 verbindet.

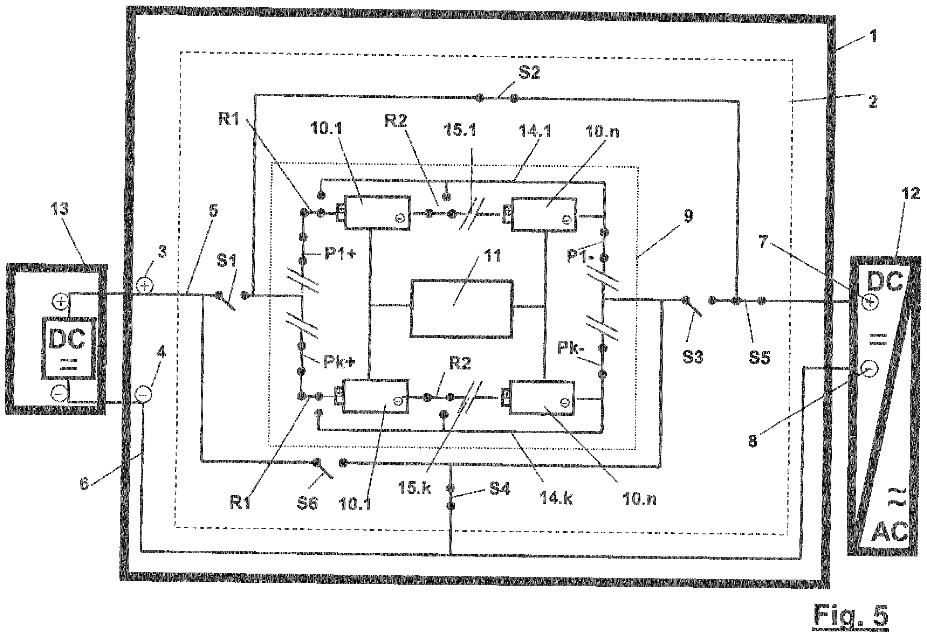

Liefert der Generator 13 keine Energie (mehr), wird der Schalter S6 geöffnet, wobei gleichzeitig der Schalter S4 geschlossen wird, um den Minuspol der Speichereinheit 9 mit dem Minuspol 8 des Verbrauchers 12 zu verbinden. In diesem in Figur 5 dargestellten Betriebszustand wird der Verbraucher 12 nur über die Speichereinheit 9 mit Energie versorgt, wobei wiederum durch geeignete seriell- und Parallelschaltung von Akkumulatoren 10 der Energiebedarf des Verbrauchers 12 gedeckt werden kann.

Die oben geschilderte Situation, in der die Generatoreinheit 13, d.h. die Gleitstromenergieerzeugungsanlage keine Energie erzeugt, kann bspw. dann auftreten, wenn kein oder nicht genug Sonnenlicht vorhanden ist, und eine Photovoltaikanlage bspw. nachts nicht arbeitet. Im Falle einer Windkraftanlage wäre dies bei Windstille der Fall.

Wie zuvor bereits beschrieben kann die Summe der Generatorleistung und der in der Speichereinheit 9 verfügbaren Energie zusammen ein höheres Energieniveau des Gleichstromsverbrauchers befriedigen, wenn z. B. nachmittags die Sonne untergeht. In diesem Betriebszustand sind in der Anschluss- und Schaltereinheit 2 die Schalter S2 und S5 für die Verbindung der Pluspole der Speichereinheit 9 mit dem Pluspol der Verbrauchereinheit 12 verbunden. Gleichzeitig wird der Schalter S4 geschlossen damit der Minuspol der Speichereinheit 9 mit dem Minuspol der Verbrauchereinheit 12 verbunden ist, der über die direkte Minusleitung 6 auch mit dem Negativpol der Gleichspannungsquelle in Verbindung steht. Diese Verschaltung ergibt eine Reihenschaltung der Gleichstromenergieerzeugungsquelle 13 mit der Speichereinheit 9 zur Versorgung des Gleichstromverbrauchers 12.

Aus Fig. 1 ist ein weiterer Betriebszustand für den Pufferspeicher 1 ableitbar, der darin besteht, dass die Schalter S1, S2 und S5 geschlossen sind, wodurch die Plusleitung 5 der Gleichstromquelle 13 direkt mit dem Pluspol des Gleichstromverbrauchers 12 verbunden ist. Die Speichereinheit 9 kann in diesem Zustand überbrückt werden, indem alle Schalterpaare P1-Pk zur Parallelschaltung von Akkumulatorensträngen15 geöffnet sind und so keine Energie in die Speichereinheit 9 fließt. Dabei ist die Minusleitung 6, wie in Fig. 1 dargestellt über den Minuspol 4 direkt mit dem Minuspol 8 des Gleichstromverbrauchers 12 verbunden. Die vom Gleichstromgenerator 13 erzeugte Energie wird in diesem Fall vollständig und direkt an den Gleichstromverbraucher 12 abgegeben. In diesem Zustand findet weder ein Be- noch ein Entladen der Speichereinheit 9 statt.

Zum Umschalten für ein Beladen der Speichereinheit 9 aus diesem Betriebszustand heraus muss lediglich der Schalter S2 geöffnet werden und der Schalter S3 so wie zumindest ein Schalterpaar P1 bis Pk geschlossen werden, damit über den geschlossenen Schalter S5 eine elektrische Verbindung der Plusleitung 5 zwischen Generator 13 und Verbraucher 12 über die Speichereinheit 9 hergestellt ist. Durch das Weiterleiten von elektrischer Energie von dem Generator 13 zum Verbraucher 12 wird die Speichereinheit 9 nun mit elektrischer Energie beladen, in dem Umfang, wie die Anschluss- und Schalteinheit 2 die Akkumulatoren 10 seriell und/oder parallel miteinander verbindet, abhängig von der Leistung, die am Verbraucher 12 nachgefragt wird. Ein derartiges Aufladen der Speichereinheit 9 mit elektrischer Energie während des Weiterleitens ist jedoch nur dadurch möglich, da die Speichereinheit 9 nicht geerdet ist.

Öffnet man aus diesem Betriebszustand heraus den Schalter S1, so wird der Generator 13 abgekoppelt und kann keine Energie abgeben, was im Zustand in dem der Generator 13 keine Energie generieren kann, erwünscht sein kann, damit die Speichereinheit 9 direkt über den Verbraucher 12 entladbar ist. Wird gleichzeitig der Schalter S2 geschlossen, der Schalter S3 geöffnet sowie der Schalter S4 geschlossen, so findet eine Energieversorgung des Verbrauchers 12 allein durch die Speichereinheit 9 statt, und zwar so lange elektrische Energie in der Speichereinheit 9 vorhanden ist.

An den vorstehend beschriebenen Ausführungsbeispielen eines erfindungsgemäßen Pufferspeichers 1 mit Anschluss- und Schalteinheit 2 am Beispiel einer Photovoltaikanlage für eine Gleichstromenergieerzeugungsanlage 13 ist leicht ersichtlich, dass, bspw. an einem wolkenlosen Frühsommertag, morgens zunächst beim flachen Sonnenstand die nur geringfügig von den Solarpanellen 13 erzeugte Energie im Speicher 13 akkumuliert werden kann und im Tagsverlauf, wenn die Summe der Energien aus dem Solargenerator 13 und der Speichereinheit 9 ausreicht an einem Verbraucher 12 addiert abgebbar ist. Es kann dann dessen Energieanforderung entsprochen werden kann. Im weiteren Tagesverlauf, je näher die Sonne dem Zenit kommt, desto weniger Energie muss aus dem Pufferspeicher 1 entnommen werden, d.h. es sind immer weniger parallel geschaltete Akkumulatorenstränge notwendig, um die Differenzenergie aus der Speichereinheit 9 bereitzustellen. Zu einem gewissen Zeitpunkt, an dem der Verbraucher allein von den Solarpanelen mit Strom versorgt werden kann, kann die Speichereinheit 9 überbrückt werden, indem alle Schalterpaare P1 bis Pk geöffnet werden. Steigt die Sonne weiter in Richtung Zenit, so wird ggf. mehr Energie erzeugt, als vom Verbraucher 12 abgenommen werden kann. Jetzt kann die erfindungsgemäße Pufferspeicheranlage 9 die "zuviel" erzeugte Energie aufnehmen und speichern, indem der Pufferspeicher in den zuvor geschilderten und in Figur 2 gezeigten Ladezustand geschaltet wird, in der die Schalter S1, S3 und S5 geschlossen sind.

Hierbei können, angepasst an die Differenzleistung zwischen Generator 13 und Verbraucher 12, über das Batteriemanagement 11 durch geeignetes Parallel- und Seriellschalten von Akkumulatoren 10, solange über den Tagesverlauf varüerende Energiemengen in der Speichereinheit 9 gesammelt werden, bis der Sonnenstand soweit abgesunken ist, dass die Energie, welche von den Solarpanelen erzeugt, wird nicht mehr ausreicht, um der Energieanforderung des Verbrauchers zu entsprechen. Jetzt ist es notwendig, dass die in der Speichereinheit 9 gespeicherte elektrische Energie auf die vom Generator 13 erzeugte Energie in dem Maße addiert wird, sodass die beiden Energiequellen- Generator 13 und Speichereinheit 9 - zusammen der Energieanforderung des Verbrauchers 12 entsprechen können. Dieser Betriebszustand ist in Figur 4 dargestellt. Liefert der Sonnenkollektor 13 keine Spannung mehr, kann zumindest über einen gewissen Zeitraum die Verbrauchernachfrage allein über die Speichereinheit 9 befriedigt werden (vgl. Figur 5).

Das geschilderte Beispiel eines Betriebes einer Photovoltaikanlage über den Tagesverlauf, lässt sich analog für andere Alternativenergieerzeugungsanlage anwenden, bei denen der Energieertrag auf Grund von Witterungs- oder Umweltbedingungen schwankt. So können Unterschiede in der Windstärke, die unterschiedlich hohe Energieerträge zur Folge haben, durch den erfindungsgemäßen Pufferspeicher 1 gepuffert werden. Ähnliches gilt bei Wellenkraftwerken oder Impulskraftwerken bzw. bei Gezeitenkraftwerken bei denen im 12-Stunden Rhythmus Energie erzeugt wird. Die vorliegende Erfindung eines Pufferspeichers ist nicht auf die vorgenannten Gleichstromenergieerzeugungsanlagen beschränkt. Das Beispiel einer Photovoltaikanlage dient lediglich der anschaulichen Erläuterung der Erfindung.

Zusammenfassend lässt sich mit dem erfindungsgemäßen Pufferspeicher bei geeigneter Auslegung der Speicherelemente die vollständige von der Energieerzeugungsanlage bereitgestellte Energie verwerten, selbst dann, wenn auf Grund von Beschränkungen, wie z. B. der Überlast eines Stromversorgernetzes weniger Energie aufnehmbar ist, als von der Gleichstromenergieerzeigungsanlage bereitgestellt wird.

Was für die Energieabgabe an Stromversorgernetze gilt, ist analog auch auf private Haushalte übertragbar, da dort bspw. der Energieabruf über den Tagesverlauf stark schwankt. So werden bspw. in einem Haushalt tagsüber Waschmaschine und Spülmaschine betrieben, jedoch wird tagsüber im Regelfall wenig Licht benötigt, so dass sich für den Strombedarf eines privaten Haushaltes verschiedene Verbrauchsnachfragen ergeben, die flexibel von dem erfindungsgemäßen Puffersspeicher 1 ausgeglichen werden können. Vorteil des erfindungsgemäßen Pufferspeichers 1 ist hierbei seine Eigenschaft sowohl überschüssige Energie aufnehmen zu können, als auch fehlende Energie - bei geladenem Speicher - hinzufügen zu können, um Verbrauchsspitzen abzudecken.

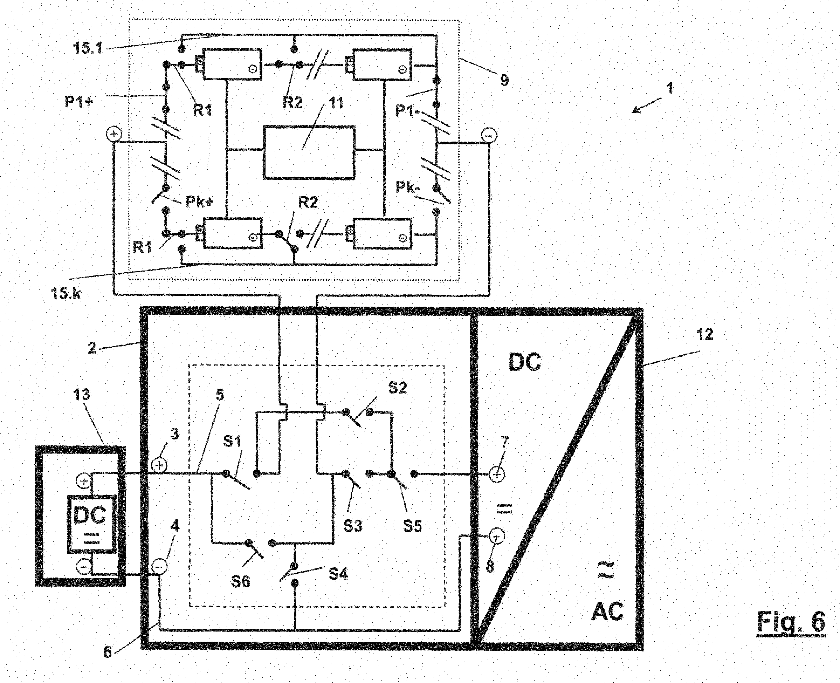

Fig. 6 zeigt ein weiteres Ausführungsbeispiel für einen erfindungsgemäßen Pufferspeicher 1 in dem die Anschluss- und Schalteinheit 2 im Verbraucher 12 integriert ist und die Speichereinheit 9 als externe Speichereinheit 9 dargestellt ist. Dies stellt eine weitere bevorzugte Ausführungsform der Erfindung dar. Die zum Beladen bzw. Entladen der Speichereinheit 9 zu betätigenden Schalter werden weiterhin über die Anschluss- und Schalteinheit 2 gesteuert. Fig. 6 zeigt eine Möglichkeit auf, wie die elektronischen Bauteile von den Speicherbauteilen in einem praktischen Anwendungsfall getrennt angeordnet werden können, so dass eine kostengünstige Aufrüstung bestehender Anlagen mit elektrischer Energiespeicherung oder-pufferung möglich ist und eine gute Bedien- und Wartungsfreundlichkeit der kompletten Anlage erreicht werden kann. Gleichzeitig zeigt Figur 6 auf, wie eine erfindungsgemäße Anschluss- und Schaltereinheit 2 unabhängig von einer Speichereinheit 9 aufgebaut und angeordnet sein kann, um den Erfindungsgedanken der Einbindung einer Speichereinheit 9 in die Hochspannungsseite einer Gleichstromenergiequelle 13 zu verwirklichen, wobei die Speichereinheit 9 so in die Plusleitung 5 der Gleichstromenergiequelle 13 geschaltet wird, dass die Speichereinheit 9 nicht geerdet ist.

Wie ausgeführt, kommt es bei dem erfindungsgemäßen Pufferspeicher 1 nicht auf die genaue Ausführung der eingesetzten Speichereinheiten/Akkumulatoren 10 an, sondern lediglich auf die Art und Weise der Einbindung der Speichereinheit 9 in die Plusleitung 5 zwischen Generatoreinheit 13 und Verbraucher 12, mit der die Speichereinheiten 10 direkt mit der Generatoranlage 13 verbindbar sind. Der Verbraucher 12 stellt dabei eine Spannungssenke dar, wodurch die vom Generator 13 erzeugte Spannung in die Speichereinheit 9 eingebracht werden kann. Durch dieses Spannungsgefälle vom Generator 13 hin zur Spannungssenke 12 kann auf die in Stand der Technik vielfach verwendeten verlustreichen Gleitstrom/Gleichstrom-Wandler verzichtet werden.

Über die Speichereinheit 9 ist mit dem erfindungsgemäßen Pufferspeicher 1 sowohl eine Laderegelung für das Paket der Akkumulatoren 10 als auch eine Verbraucherstromregelung erreichbar. Somit wird mit dem erfindungsgemäßen Pufferspeicher 1, der in die Plusleitung 5 der Gleichstromerzeugungsanlage 13 geschaltet wird, erreicht, dass sämtliche vom Gleichstromgenerator 13 erzeugte elektrische Energie verwertet werden kann, wobei die elektrische Energie bedarfsgemäß einen Gleichstromversorger 12 zugeführt wird und ggf. "zuviel" erzeugte Energie in der Speichereinheit 9 temporär gespeichert wird, damit diese zu einem Zeitpunkt zur Verfügung steht, in der der Gleichstromerzeuger 13 nicht ausreichend oder keine elektrische Energie zur Verfügung stellt. Der Wirkungsgrad der Energieerzeugung und Energieverwertung dieser Anlage ist damit sehr hoch, da keine Verlustleistung über eine Gleitstrom/Gleichstromwandlung verloren geht. Sämtliche erzeugbare Energie kann verwertet werden und auch sonstige Schaltungsverluste durch Parallel- oder Seriellschalten von elektronischen Baugruppen werden weitestgehend vermieden.

Besonders vorteilhaft wird durch die beschriebene Anlage sämtlicher Strom, der durch den Gleichstromgenerator erzeugt wird, aufgenommen und verwertet bzw. gespeichert, so dass kein Strom in Verlustleistung umgesetzt werden muss, auch wenn kein Verbraucher vorhanden ist. Weiterhin kann zu allen Witterungsbedingungen Gleichstromenergie erzeugt werden, die im Pufferspeicher in jeder Höhe gespeichert werden kann und zu einem späteren Zeitpunkt an einem Verbraucher in einer an diesen Verbraucher angepassten Höhe abgegeben werden kann. Damit lässt sich eine wesentlich effizientere und damit im Wirkungsgrad verbessert Energieausbeutung mit Photovoltaik-, Windkraft-, Wellenkraft-, Impulskraft- oder Gezeitenkraftwerke erzielen.

### BEZUGSZEICHENLISTE

- 1: Pufferspeicher
- 2: Anschluss- und Schalteinheit
- 3: Pluspol anschlussseitig
- 4: Minuspol anschlussseitig
- 5: Plusleitung
- 6: Minusleitung
- 7: Pluspol Gleichstromverbraucher
- 8: Minuspol Gleichstromverbraucher
- 9: Speichereinheit
- 10, 10.1 - 10.n: aufladbare Batterie /Akkumulator
- 11: Batteriemanagement- und Überwachungseinheit
- 12: Gleichstromverbraucher
- 13: Gleichstromenergieerzeugungsanlage / Generator
- 14, 14.1 - 14.k: Bypassleitung
- 15, 15.1 - 15.k: Akkumulatorstrang

- S1-S6: Schalter
- P1+, P1- bis Pk+,: Pk-Schalter zum Parallelschalten von Akkumulatorsträngen
- P1 - Rn: Schalter zum in-Reiheschalten von Akkumulatoren

## Patentansprüche

1. Verfahren zum Zwischenspeichern elektrischer Energie einer Gleichstromenergieerzeugungsanlage (13), in welchem in einer Plusleitung (5), die einen Pluspol (3) einer Gleichstromenergieerzeugungsanlage (13) mit einem Pluspol (7) eines Gleichstromverbrauchers (12) verbindet, eine nicht geerdete Speichereinheit (9) so in Reihe angeordnet und geschaltet wird, dass
- bei einer Gleichstromenergienachfrage durch den Gleichstromverbraucher (12), die geringer ist als die Gleichstromenergie, die von der Gleichstromenergieerzeugungsanlage (13) bereitgestellt wird, die überschüssige Gleichstromenergie in der Speichereinheit (9) zwischengespeichert wird, indem der Pluspol der Speichereinheit (9) mit dem Pluspol (7) der Gleichstromenergieerzeugungsanlage (13) und der Minuspol der Speichereinheit (9) mit dem Pluspol (7) des Gleichstromverbrauchers (12) verbunden wird, und bei einer Gleichstromenergienachfrage durch den Gleichstromverbraucher (12), die größer ist als die Gleichstromenergie, die von der Gleichstromenergieerzeugungsanlage (13) bereitgestellt wird, Gleichstromenergie aus der Speichereinheit (9) entnommen wird, indem der Pluspol der Speichereinheit (9) mit dem Pluspol (7) des Gleichstromverbrauchers (12) und
- der Minuspol der Speichereinheit (9) mit dem Pluspol der Gleichstromenergieerzeugungsanlage (13) verbunden wird, wobei
- in beiden Fällen der Minuspol (4) der Gleichstromenergieerzeugungsanlage (13) mittels einer Minusleitung (6) direkt mit dem Minuspol (8) eines Gleichstromverbrauchers verbunden wird.

2. Zwischenspeicherverfahren nach Anspruch 1, bei welchem ein Pufferspeicher (1) für elektrische Energie der Gleichstromenergieerzeugungsanlage (13), mit einer Anschluss und Schalteinheit (2) mit einem anschlussseitigen Pluspol (3) und einem anschlussseitigen Minuspol (4) zum Entgegennehmen von elektrischer Energie in Form von Gleichstrom und mit der Minusleitung (6) und der Plusleitung (5) zum Weiterleiten der elektrischen Energie an den Gleichstromverbraucher (12) mit dem Pluspol (7) und dem Minuspol (8), der mit seinem Minuspol (8) mit dem anschlussseitigen Minuspol (4) der Anschluss- und Schalteinheit (2) direkt verbunden ist, wobei die Anschluss- und Schalteinheit (2) die in der Plusleitung (5) angeordnete Speichereinheit (9) für die Speicherung der elektrischen Energie aufweist und die so in die Plusleitung (5) der Anschluss- und Schalteinheit (2) eingebunden ist, dass die von der Anschluss- und Schalteinheit (2) aufgenommene elektrische Energie zuerst zur Speichereinheit (9) und von dieser zum Gleichstromverbraucher (12) weiterleitbar ist, wobei mit der Weiterleitung der elektrischen Energie die Speichereinheit (9) be- oder entladbar ist oder die in der Speichereinheit (9) gespeicherte elektrische Energie an den Gleichstromverbraucher (12) abgebbar ist, wenn von der Anschluss und Schalteinheit (2) keine Energie entgegennehmbar ist.

3. Verfahren nach Anspruch 1 oder 2, wobei beim Pufferspeicher (1) die von der Anschluss- und Schalteinheit (2) entgegengenommene elektrische Energie von der Speichereinheit (9) vollständig an den Gleichstromverbraucher (12) weitergeleitet wird oder vollständig von der Speichereinheit (9) zum Beladen von Akkumulatoren (10) verwendet wird.

4. Verfahren nach Anspruch 1, wobei die Speichereinheit (9) des verwendeten Pufferspeichers (1) eine Vielzahl von Akkumulatoren (10) aufweist, die sowohl in Parallel- als auch in Serienschaltung bedarfsgemäß zu- und abschaltbar angeordnet sind, und die Anschluss- und Schalteinheit (2) die einzelnen parallelen und seriellen Verbindungen der Akkumulatoren (10) untereinander bedarfsgerecht schaltet, wobei eine bedarfsgerechte Anzahl von parallel geschalteten Akkumulatoren (10.1 - 10.n) durch die Differenz der Stromstärken an der Anschlussseite der Anschluss- und Schalteinheit (2) und der vom Gleichstromverbraucher (12) nachgefragten Stromstärke bestimmt wird und eine bedarfsgerechte Anzahl seriell geschalteter Akkumulatoren (10.1 - 10.n) durch die Spannungsdifferenz zwischen der Anschlussseite der Anschluss- und Schalteinheit (2) und dem vom Gleichstromverbraucher (12) nachgefragten Spannungsbedarf bestimmt wird.

5. Verfahren nach Anspruch 4, wobei bei dem verwendeten Pufferspeicher (1) die maximal benötigte Anzahl an parallel- und seriell durch die Anschluss- und Schalteinheit (2) zu- und abschaltbaren Akkumulatoren (10) in der Speichereinheit (9) durch die maximale Spannung und/oder maximale Stromstärke bestimmt wird, die an der Anschlussseite der Anschluss- und Schalteinheit (2) anlegbar ist.

6. Verfahren nach Anspruch 4 oder 5, wobei bei dem verwendeten Pufferspeicher (1) die Anschluss- und Schalteinheit (2) eine Akkumulator-Überwachungseinheit (11) aufweist, die eine Überlastung der Akkumulatoren (10) bei einer zu großen, nicht durch die Speichereinheit (9) speicherbaren und durch die Anschlussseite Anschluss- und Schalteinheit (2) entgegennehmbaren Energiemenge dadurch verhindert, dass die Anschluss- und Schalteinheit (2) weitere Akkumulatoren in die Energieübertragung zuschaltet oder, wenn alle Akkumulatoren bereits verschaltet sind, die Speichereinheit (9) von der Anschluss- und Schalteinheit (2) trennt.

7. Verfahren nach einem der Ansprüche 4 bis 6, wobei bei dem verwendeten Pufferspeicher (1) die Anschluss- und Schalteinheit (2), im Falle dass von der Anschluss- und Schalteinheit (2) keine Energie entgegennehmbar ist, so viele Akkumulatoren (10) parallel bzw. seriell verbindet, dass die Nachfrage an elektrischer Energie am Gleichstromverbraucher (12) durch Entladen der Akkumulatoren entsprochen werden kann.

8. Verfahren nach einem der Ansprüche 4 bis 7, wobei bei dem verwendeten Pufferspeicher (1) der Gleichstromverbraucher (12) ein Gleichstrom- / Wechselstromwandler ist, der für die Einspeisung der elektrischen Energie an ein Stromnetz zur Versorgung von Stromverbrauchern vorgesehen ist, wobei das Stromnetz öffentlich oder privat ist.

9. Verfahren nach einem der Ansprüche 4 bis 7, wobei bei dem verwendeten Pufferspeicher (1) als die Gleichstromerzeugungsanlage (13) eine Photovoltaikanlage, ein Windkraft-, ein Wellenkraft-, ein Gezeitenkraft- oder ein Impulskraftwerk oder ein sonstiges zu fossilen Brennstoffen alternative Gleichstromerzeugungsanlage verwendet wird.

10. Elektrische Schaltungsanordnung, zur Durchführung des Verfahrens nach einem der Ansprüche 1 bis 9.

## Claims

1. Method for buffer-storing electrical energy of a DC energy generating installation (13), by virtue of the fact that a non-earthed storage unit (9) is arranged and connected in series in a positive line (5) connecting a positive pole (3) of a DC energy generating installation (13) to a positive pole (7) of a DC load (12), such that
- in the case of a DC energy demand by the DC load (12) which is lower than the DC energy provided by the DC energy generating installation (13), the excess DC energy is buffer-stored in the storage unit (9) by virtue of the fact that the positive pole of the storage unit (9) is connected to the positive pole (7) of the DC energy generating installation (13) and the negative pole of the storage unit (9) is connected to the positive pole (7) of the DC load (12), and
- in the case of a DC energy demand by the DC load (12) which is greater than the DC energy provided by the DC energy generating installation (13), DC energy is drawn from the storage unit (9) by virtue of the fact that the positive pole of the storage unit (9) is connected to the positive pole (7) of the DC load (12) and the negative pole of the storage unit (9) is connected to the positive pole of the DC energy generating installation (13), wherein
- in both cases the negative pole (4) of the DC energy generating installation (13) is directly connected to the negative pole (8) of a DC load by means of a negative line (6).

2. Buffer-storing method according to Claim 1, wherein a buffer store (1) for electrical energy of the DC energy generating installation (13) having a connection and switching unit (2) with a connection-side positive pole (3) and a connection-side negative pole (4) for receiving electrical energy in the form of DC current and with the negative line (6) and the positive line (5) for forwarding the electrical energy to the DC load (12) having the positive pole (7) and the negative pole (8) is directly connected by its negative pole (8) to the connection-side negative pole (4) of the connection and switching unit (2), wherein the connection and switching unit (2) has the storage unit (9) for storing the electrical energy, said storage unit being arranged in the positive line (5), and said storage unit is incorporated into the positive line (5) of the connection and switching unit (2) such that the electrical energy taken up by the connection and switching unit (2) can be forwarded firstly to the storage unit (9) and from the latter to the DC load (12), wherein with the forwarding of the electrical energy the storage unit (9) can be charged or discharged or the electrical energy stored in the storage unit (9) can be output to the DC load (12) if no energy can be received by the connection and switching unit (2).

3. Method according to Claim 1 or 2, wherein, in the case of the buffer store (1), the electrical energy received by the connection and switching unit (2) is forwarded from the storage unit (9) completely to the DC load (12) or is used completely by the storage unit (9) for charging rechargeable batteries (10).

4. Method according to Claim 1, wherein the storage unit (9) of the buffer store (1) used has a multiplicity of rechargeable batteries (10) which are arranged such that they can be connected and disconnected as required both in parallel connection and in series connection, and the connection and switching unit (2) switches the individual parallel and series connections of the rechargeable batteries (10) among one another in a requirement-conforming manner, wherein a requirement-conforming number of parallel-connected rechargeable batteries (10.1-10.n) is determined by the difference between the current intensities at the connection side of the connection and switching unit (2) and the current intensity demanded by the DC load (12), and a requirement-conforming number of series-connected rechargeable batteries (10.1-10.n) is determined by the voltage difference between the connection side of the connection and switching unit (2) and the voltage requirement demanded by the DC load (12).

5. Method according to Claim 4, wherein, in the case of the buffer store (1) used, the maximum required number of rechargeable batteries (10) that can be connected and disconnected in parallel and in series by the connection and switching unit (2) in the storage unit (9) is determined by the maximum voltage and/or maximum current intensity which can be applied to the connection side of the connection and switching unit (2).

6. Method according to Claim 4 or 5, wherein, in the case of the buffer store (1) used, the connection and switching unit (2) has a rechargeable battery monitoring unit (11), which prevents overloading of the rechargeable batteries (10) in the case of an excessively large quantity of energy which cannot be stored by the storage unit (9) and cannot be received by the connection side of the connection and switching unit (2) by virtue of the connection and switching unit (2) connecting further rechargeable batteries into the energy transfer or, if all the rechargeable batteries have already been interconnected, disconnecting the storage unit (9) from the connection and switching unit (2).

7. Method according to any of Claims 4 to 6, wherein, in the case of the buffer store (1) used, the connection and switching unit (2), in the case where no energy can be received by the connection and switching unit (2), connects a sufficient number of rechargeable batteries (10) in parallel and/or in series such that the demand for electrical energy at the DC load (12) can be met by the discharging of the rechargeable batteries.

8. Method according to any of Claims 4 to 7, wherein, in the case of the buffer store (1) used, the DC load (12) is a DC/AC converter provided for feeding the electrical energy to an electricity grid for supplying current loads, wherein the electricity grid is public or private.

9. Method according to any of Claims 4 to 7, wherein, in the case of the buffer store (1) used, a photovoltaic installation, a wind power, a wave power, a tidal power or a pulsed power plant or some other DC energy generating installation that is an alternative to fossil fuels is used as the DC energy generating installation (13).

10. Electrical circuit arrangement, designed for carrying out the method according to any of Claims 1 to 9.

## Revendications

1. Procédé de stockage en tampon d'énergie électrique d'une installation génératrice d'énergie à courant continu (13) dans lequel une unité de stockage (9) non mise à la terre est disposée et est connectée en série sur une ligne plus (5) qui connecte un pôle plus (3) d'une installation génératrice d'énergie à courant continu (13) à un pôle plus (7) d'une charge à courant continu (12), de manière à ce que,
- lors d'une demande d'énergie à courant continu provenant de la charge à courant continu (12), qui est inférieure à l'énergie à courant continu délivrée par l'installation génératrice d'énergie à courant continu (13), l'énergie à courant continu en excès est stockée en tampon dans l'unité de stockage (9) en connectant le pôle plus de l'unité de stockage (9) au pôle plus (7) de l'installation génératrice d'énergie à courant continu (13) et le pôle moins de l'unité de stockage (9) au pôle plus (7) de la charge à courant continu (12), et
- lors d'une demande d'énergie à courant continu provenant de la charge à courant continu (12), qui est supérieure à l'énergie à courant continu délivrée par l'installation génératrice d'énergie à courant continu (13), l'énergie à courant continu est prélevée à partir de l'unité de stockage (9) en connectant le pôle plus de l'unité de stockage (9) au pôle plus (7) de la charge à courant continu (12) et le pôle moins de l'unité de stockage (9) au pôle plus de l'installation génératrice d'énergie à courant continu (13), dans lequel
- dans les deux cas, le pôle moins (4) de l'installation génératrice d'énergie à courant continu (13) est directement connecté au pôle moins (8) d'une charge à courant continu par l'intermédiaire d'une ligne moins (6).

2. Procédé de stockage en tampon selon la revendication 1, dans lequel un dispositif de stockage tampon (1) destiné à de l'énergie électrique de l'installation génératrice d'énergie à courant continu (13) à une unité de raccordement et de commutation (2) à un pôle plus côté raccordement (3) et à un pôle moins côté raccordement (4) pour recevoir de l'énergie électrique sous la forme d'un courant continu et par la ligne moins (6) et par la ligne plus (5), afin d'acheminer l'énergie électrique à la charge à courant continu (12), au pôle plus (7) et au pôle moins (8), qui est directement connecté par son pôle moins (8) au pôle moins côté raccordement (4) de l'unité de raccordement et de commutation (2), dans lequel l'unité de raccordement et de commutation (2) comporte l'unité de stockage (9) disposée sur la ligne plus (5) pour stocker l'énergie électrique et connectée sur la ligne plus (5) de l'unité de raccordement et de commutation (2) de manière à ce que l'énergie électrique prélevée à partir de l'unité de raccordement et de commutation (2) puisse être tout d'abord acheminée vers l'unité de stockage (9) et de celle-ci, vers la charge à courant continu (12), dans lequel l'unité de stockage (9) peut être chargée ou déchargée du fait de l'acheminement de l'énergie électrique ou l'énergie électrique stockée dans l'unité de stockage (9) peut être délivrée à la charge à courant continu (12) lorsqu'aucune énergie ne peut être reçue par l'unité de raccordement et de commutation (2).

3. Procédé selon la revendication 1 ou 2, dans lequel, dans le cas du dispositif de stockage tampon (1), l'énergie électrique reçue par l'unité de raccordement et de commutation (2) est entièrement acheminée du dispositif de stockage (9) vers la charge à courant continu (12) ou est entièrement utilisée par l'unité de stockage (9) pour charger des accumulateurs (10).

4. Procédé selon la revendication 1, dans lequel l'unité de stockage (9) du dispositif de stockage tampon utilisé (1) comprend une pluralité d'accumulateurs (10) qui sont disposés de manière à pouvoir être mis en et hors circuit en parallèle et en série selon les besoins, et l'unité de raccordement et de commutation (2) commute en fonction des besoins les connexions les unes aux autres en parallèle et en série individuelles des accumulateurs (10), dans lequel un nombre d'accumulateurs connectés en parallèle selon les besoins (10.1-10.n) est déterminé à partir de la différence entre les intensités de courant au niveau du côté raccordement de l'unité de raccordement et de commutation (2) et de l'intensité de courant demandée par la charge à courant continu (12) et un nombre d'accumulateurs connectés en série (10.1-10.n) selon les besoins est déterminé à partir de la différence de tension entre le côté raccordement de l'unité de raccordement et de commutation (2) et du besoin de tension demandé par la charge à courant continu (12).

5. Procédé selon la revendication 4, dans lequel, dans le cas du dispositif de stockage tampon utilisé (1), le nombre nécessaire maximum d'accumulateurs (10) pouvant être mis en et hors circuit en parallèle et en série par l'intermédiaire de l'unité de raccordement et de commutation (2) dans l'unité de stockage (9) est déterminé par la tension maximale et/ou l'intensité de courant maximale qui peut être appliquée au côté raccordement de l'unité de raccordement et de commutation (2).

6. Procédé selon la revendication 4 ou 5, dans lequel, dans le cas du dispositif de stockage tampon utilisé (1), l'unité de raccordement et de commutation (2) comprend une unité de surveillance des accumulateurs (11) qui réduit une surcharge des accumulateurs (10) lorsque la quantité d'énergie ne pouvant pas être stockée par l'unité de stockage (9) et pouvant être reçue par le côté raccordement de l'unité de raccordement et de commutation (2) est trop importante, de manière à ce que l'unité de raccordement et de commutation (2) mette en circuit d'autres accumulateurs dans la transmission d'énergie ou sépare l'unité de stockage (9) de l'unité de raccordement et de commutation (2) lorsque tous les accumulateurs sont déjà mis en circuit.

7. Procédé selon l'une quelconque des revendications 4 à 6, dans lequel, dans le cas du dispositif de stockage tampon utilisé (1), l'unité de raccordement et de commutation (2) connecte en parallèle ou en série un nombre suffisant d'accumulateurs (10), dans le cas où aucune énergie ne peut être reçue par l'unité de raccordement et de commutation (2), de manière à ce que la demande d'énergie électrique au niveau de la charge à courant continu (12) puisse être prise en compte par décharge des accumulateurs.

8. Procédé selon l'une quelconque des revendications 4 à 7, dans lequel, dans le cas du dispositif de stockage tampon utilisé (1), la charge à courant continu (12) est un transformateur de courant continu/alternatif qui est prévu pour l'alimentation en énergie électrique d'un réseau électrique destiné à alimenter des charges électriques, dans lequel le réseau électrique est public ou privé.

9. Procédé selon l'une quelconque des revendications 4 à 7, dans lequel, dans le cas du dispositif de stockage tampon utilisé (1), on utilise en tant qu'installation génératrice de courant continu (13) une installation photovoltaïque, une centrale éolienne, une centrale utilisant l'énergie des vagues, une centrale marémotrice ou une centrale à impulsions, ou une installation génératrice d'énergie à courant continu de ce type comme alternative aux combustibles fossiles.

10. Circuit électrique, conçu pour mettre en ouvre le procédé selon l'une quelconque des revendications 1 à 9.
